# EUROPEAN PATENT APPLICATION

(11) **EP 4 718 530 A1**
(43) Date of publication of application: **01.04.2026**
(21) Application number: 25202715.6
(22) Date of filing: 17.09.2025
(51) Int. Cl.: H01M 4/36, H01M 4/131, H01M 4/505, H01M 4/58, H01M 10/0525, H01M 4/62

(54) **POSITIVE ELECTRODE AND RECHARGEABLE LITHIUM BATTERY INCLUDING THE SAME**

(30) Priority: 20.09.2024 KR 20240127361
(71) Applicant: SAMSUNG SDI CO., LTD., Yongin-si, Gyeonggi-do 17084 (KR)
(72) Inventor: PARK, Sejeong, 17084 Yongin-si, Gyeonggi-do (KR); LEE, Boram, 17084 Yongin-si, Gyeonggi-do (KR); OH, Songyul, 17084 Yongin-si, Gyeonggi-do (KR)
(74) Representative: Michalski Hüttermann & Partner Patentanwälte mbB

(57) **Abstract**

Disclosed are positive electrodes and rechargeable lithium batteries. The positive electrode includes a current collector, a first active material layer on the current collector, and a second active material layer on the first active material layer. The first active material layer includes a first particle including a layered positive electrode active material, a second particle including an olivine-based active material, a first conductive material; and a first binder. The second active material layer includes the second particle, a second conductive material, and a second binder. An amount of the first particle in the first active material layer is equal to or greater than about 70% and equal to or less than about 90%.

## Description

### CROSS-REFERENCE TO RELATED APPLICATION

This application claims priority to Korean Patent Application No. 10-2024-0127361 filed on September 20, 2024 in the Korean Intellectual Property Office.

### BACKGROUND

The present disclosure relates to a positive electrode, and a rechargeable lithium battery including the positive electrode, and for example, to a positive electrode including a Ni-based active material, and a rechargeable lithium battery including the Ni-based active material.

Recently, with the increasing presence of battery-using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

A rechargeable lithium battery typically includes a positive electrode, a negative electrode, and an electrolyte, the positive and negative electrodes include an active material in which intercalation and deintercalation are possible, and generates electrical energy caused by oxidation and reduction reactions when lithium ions are intercalated and deintercalated.

### SUMMARY

An example embodiment of the present disclosure includes a positive electrode in which adhesion between a current collector and a positive electrode active material is increased to facilitate the manufacture of an electrode plate.

An example embodiment of the present disclosure includes a positive electrode with improved capacity and lifespan characteristics.

According to an example embodiment of the present disclosure, a positive electrode for a rechargeable lithium battery may include a current collector; a first active material layer on the current collector; and a second active material layer on the first active material layer. The first active material layer may include a first particle including a layered positive electrode active material; a second particle including an olivine-based active material; a first conductive material; and a first binder. The second active material layer may include the second particle; a second conductive material; and a second binder. An amount of the first particle in the first active material layer may be equal to or greater than about 70% and equal to or less than about 90%.

According to an example embodiment of the present disclosure, a positive electrode for a rechargeable lithium battery may include a current collector; a first active material layer on the current collector; and a second active material layer on the first active material layer. The first active material layer may include a first particle, a second particle, a first conductive material, and a first binder. The second active material layer may include the second particle, a second conductive material, and a second binder. The first particle may include a layered positive electrode active material. The second particle may include an olivine-based positive electrode active material. A weight of the first particle may be in a range of ≥ 25% to ≤ 35% of a total weight of the first and second active material layers.

According to an example embodiment of the present disclosure, a rechargeable lithium battery may include the positive electrode discussed above.

### BRIEF DESCRIPTION OF DRAWINGS

FIG. 1 is a simplified conceptual diagram illustrating a rechargeable lithium battery according to an example embodiment of the present disclosure.
FIGS. 2 to 5 is simplified diagrams illustrating a rechargeable lithium battery according to an example embodiment of the present disclosure, with FIG. 2 illustrating a cylindrical battery, FIG. 3 illustrating a prismatic battery, and FIGS. 4 and 5 illustrating pouch-type batteries.
FIG. 6 is a cross-sectional view illustrating a positive electrode for a rechargeable lithium battery according to an example embodiment of the present disclosure.
FIG. 7 is an enlarged view illustrating a first active material layer according to an example embodiment of the present disclosure.
FIG. 8 is an enlarged view illustrating a second active material layer according to an example embodiment of the present disclosure.
FIG. 9 is an enlarged view illustrating a first active material layer according to an example embodiment of the present disclosure.
FIG. 10 is an enlarged view illustrating a second active material layer according to an example embodiment of the present disclosure.
FIG. 11 is an enlarged view illustrating a second active material layer according to an example embodiment of the present disclosure.
FIG. 12 is a graph illustrating a battery adhesion according to an example embodiment of the present disclosure.
FIG. 13 is a graph illustrating a battery resistance according to an example embodiment of the present disclosure.
FIG. 14 is a diagram illustrating a method of manufacturing a positive electrode according to an example embodiment of the present disclosure.

### DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings as examples have general properties, and shapes of regions illustrated in the drawings as examples are used to disclose specific shapes, but are not limited to the scope of the present disclosure. It is understood that, although the terms "first," "second," "third," and the like, may be used herein to describe various elements, these elements should not be limited by these terms. These terms are only used to distinguish one element from another element. The example embodiments explained and illustrated herein include complementary embodiments thereof.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, the term "single particle" may refer to the fact that one single particle is present alone without a grain boundary therein, and is a monolithic structure in which particles are not aggregated together with one another, but are present as an independent phase in terms of morphology, and thus may be expressed as a single crystal particle. Alternatively, the single particle may be or include a particle including several crystals. The single particle may be provided as a single isolated form, or may be in a form in which less than 10 single particles are adhered to each other.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

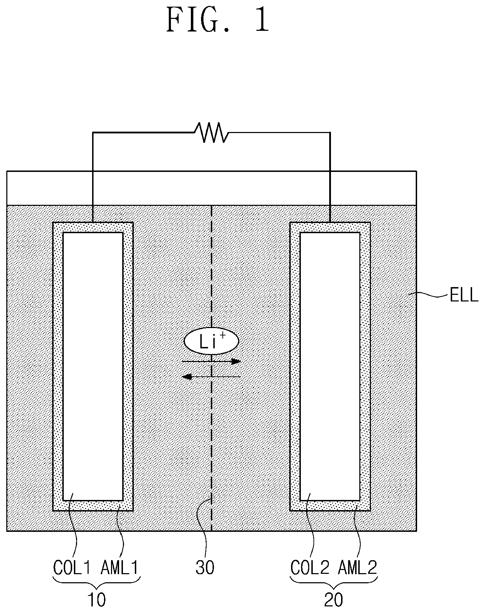

FIG. 1 is a simplified conceptual diagram illustrating a rechargeable lithium battery according to an example embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be or include a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for the rechargeable lithium battery may include a current collector COL1 and a positive electrode active material layer AML1 formed on the current collector COL1. The positive electrode active material layer AML1 may include a positive electrode active material, and may further include a binder and/or a conductive material.

For example, the positive electrode 10 may further include an additive that can constitute a sacrificial positive electrode.

Aluminum (Al) may be included as the current collector COL1, but the present disclosure is not limited thereto.

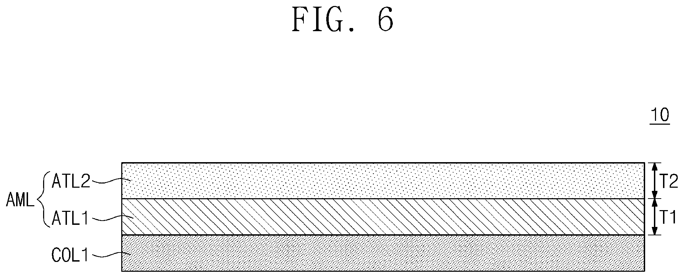

With reference to FIG. 6, the following describes the positive electrode 10 according to an example embodiment of the present disclosure.

### Negative Electrode 20

The negative electrode 20 for a rechargeable lithium battery may include a current collector COL2 and a negative electrode active material layer AML2 located on the current collector COL2. The negative electrode active material layer AML2 may include a negative electrode active material, and may further include a binder and/or a conductive material.

For example, the negative electrode active material layer AML2 may include a negative electrode active material in a range of ≥ 90 wt% to ≤ 99 wt%, a binder in a range of ≥ 0.5 wt% to ≤ 5 wt%, and a conductive material in a range of ≥ 0 wt% to ≤ 5 wt%.

The binder may be configured to improve attachment of negative electrode active material particles to each other, and to improve attachment of the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

The conductive material may be included to provide an electrode with conductivity, and any suitable conductive material that does not cause a chemical change in a battery may be included as the conductive material. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

The current collector COL2 may include at least one of a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include at least one of a material that can reversibly intercalate and deintercalate lithium ions, lithium metal, a lithium metal alloy, a material that can dope and de-dope lithium, or a transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as at least one of non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include at least one of silicon, silicon-carbon composite, SiOₓ (where 0<x<2), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, SnO₂, a Sn-based alloy, and a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be present between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer located on a surface of the core.

The Si-based negative electrode active material or the Sn-based negative electrode active material may be included in combination with a carbon-based negative electrode active material.

### Separator 30

Based on a type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as at least one of a polyethylene/polypropylene bi-layered separator, a polyethylene/polypropylene/polyethylene tri-layered separator, and a polypropylene/polyethylene/polypropylene tri-layered separator.

The separator 30 may include a porous substrate, and a coating layer on one surface, or on opposite surfaces, of the porous substrate, the coating layer including an organic material, an inorganic material, or a combination thereof.

The porous substrate may be or include a polymer layer including at least one of polyolefin such as polyethylene and polypropylene, polyester such as or including at least one of polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials discussed above.

The organic material may include a polyvinylidenefluoride-based copolymer or a (meth)acrylic copolymer.

The inorganic material may include an inorganic particle such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer, or may be present as a stack of a coating layer including the organic material and a coating layer including an inorganic material.

### Electrolyte ELL

The electrolyte ELL for a rechargeable lithium battery may include a non-aqueous organic solvent and a lithium salt.

The non-aqueous organic solvent may be configured as a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol. The aprotic solvent may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone or in a mixture of two or more substances.

In addition, when a carbonate-based solvent is included, a cyclic carbonate and a linear carbonate may be mixed, and the cyclic carbonate and the linear carbonate may be mixed in a volume ratio in a range of ≥ 1: 1 to ≤ 1:9.

The lithium salt may be or include a material that dissolves in the non-aqueous organic solvent to constitute as a supply source of lithium ions in a battery, and plays a role in enabling a basic operation of a rechargeable lithium battery and in promoting the movement of lithium ions between positive and negative electrodes. The lithium salt may include, for example, at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethanesulfonate, lithium difluorobis(oxalato)phosphate (LiDFOP), and lithium bis(oxalato)borate (LiBOB)

### Rechargeable Lithium Battery

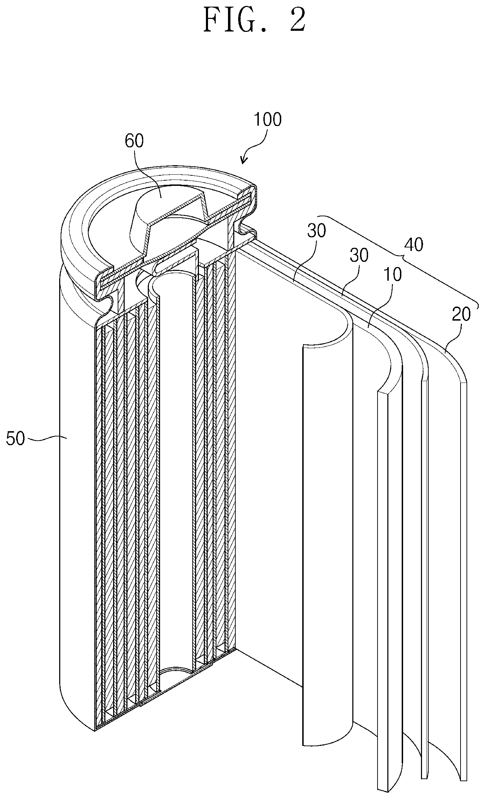

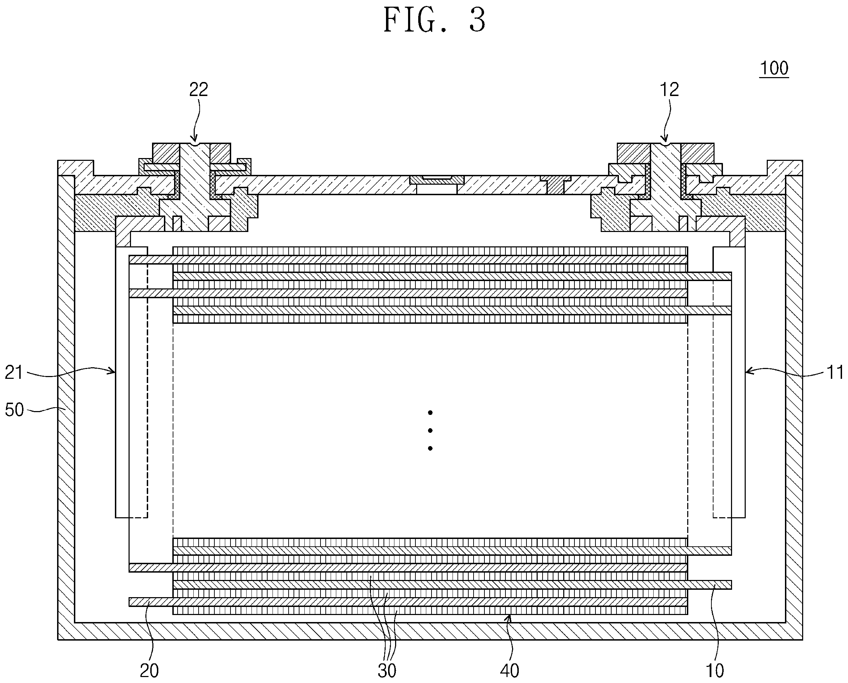

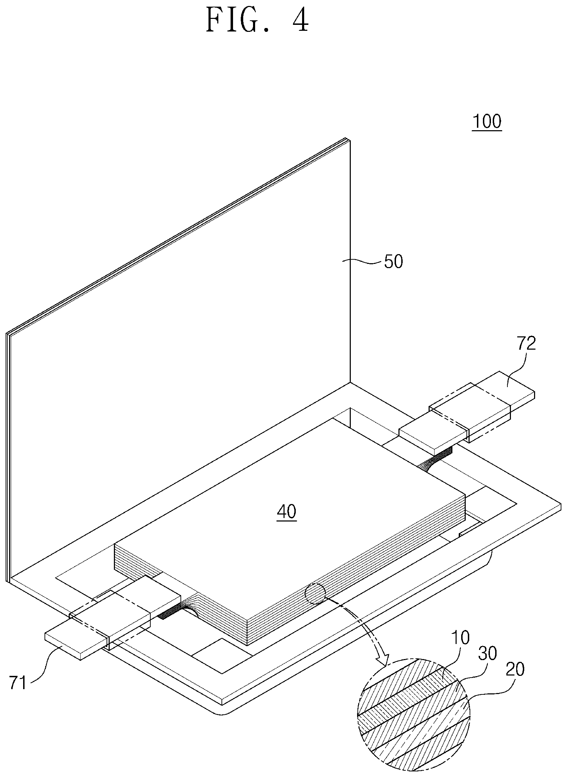

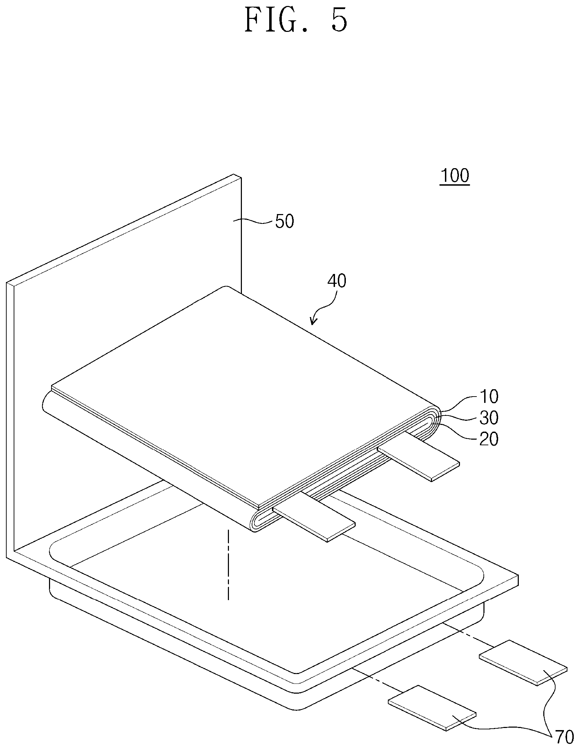

Based on a shape of a rechargeable lithium battery, the rechargeable lithium battery may be classified into cylindrical, prismatic, pouch, and coin types. FIGS. 2 to 5 are simplified diagrams illustrating a rechargeable lithium battery according to an example embodiment, with FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 as illustrated in FIG. 5, or a positive electrode tab 71 and a negative electrode tab 72 as illustrated in FIG. 4, the electrode tabs 70/71/72 forming an electrical path for externally inducing a current generated in the electrode assembly 40.

The rechargeable lithium battery according to an example embodiment of the present disclosure may be applicable to, e.g., automotive vehicles, mobile phones, and/or any other electrical devices, but the present disclosure is not limited thereto.

The following focuses on a positive electrode having a double-layered structure of a first particle PTC1 and a second particle PTC2.

### First Particle PTC1

The first particle PTC1 may include a layered positive electrode active material.

In an example embodiment, the layered positive electrode active material may include nickel (Ni). For example, the layered positive electrode active material may include at least one of lithium nickel oxide (LNO), lithium nickel cobalt aluminum oxide (NCA), lithium nickel cobalt manganese oxide (NCM), and lithium nickel cobalt manganese aluminum oxide (NCMA).

In an example embodiment, the first particle PTC1 may include a compound represented by Chemical Formula 1.

Chemical Formula 1: Liₐ₁Niₓ₁Co_{y1}Mn_{z1}X_{c1}O_{2-b1}

In Chemical Formula 1, 0.8 ≤ a1 ≤ 1.2, 0.8 ≤ x1 ≤ 1.0, 0 ≤ y1 ≤ 0.2, 0 ≤ z1 ≤ 0.2 0 ≤ c1 ≤ 0.05, and 0 ≤ b1 ≤ 0.05.

In Chemical Formula 1, x1+y1+z1+c1 ≤ 1. For example, x1+y1+z1+c1=1.

In Chemical Formula 1, X may be or include at least one of Al, Ti, Mg, Zr, Mo, or Nb.

The first particle PTC1 may have an advantage of high capacity and high energy density. For example, the first particle PTC1 may be a high-nickel-based positive electrode active material including a high amount of nickel, capable of achieving high capacity and high performance.

In an example embodiment, the first particle PTC1 may include a first coating layer on a surface thereof. As the first particle PTC1 includes the first coating layer, it may be possible to effectively reduce or suppress structural collapse due to repetition of charging and discharging. Accordingly, a rechargeable battery may improve in lifespan characteristics.

The first coating layer may include at least one of an aluminum-containing compound, a titanium-containing compound, a magnesium-containing compound, a zirconium-containing compound, a molybdenum-containing compound, a niobium-containing compound, or a combination thereof. A metal-containing compound in the first coating layer may be or include, for example, at least one of metal oxide, metal hydroxide, metal carbonate, a compound thereof, or a mixture thereof. The metal-containing compound may further include other metal(s) or a non-metal element. For example, the first coating layer may further include at least one or more of lithium, manganese, and nickel.

The first particle PTC1 may have a single particle shape and/or a secondary particle shape. For example, the first particle PTC1 may have a primary particle shape. For example, the first particle PTC1 may be present in only a single particle shape, only a secondary particle shape, or a shape in which a single particle shape and a secondary particle shape are mixed. In an example embodiment, the first particle PTC1 has a bimodal shape in which a single particle shape and a secondary particle shape are mixed.

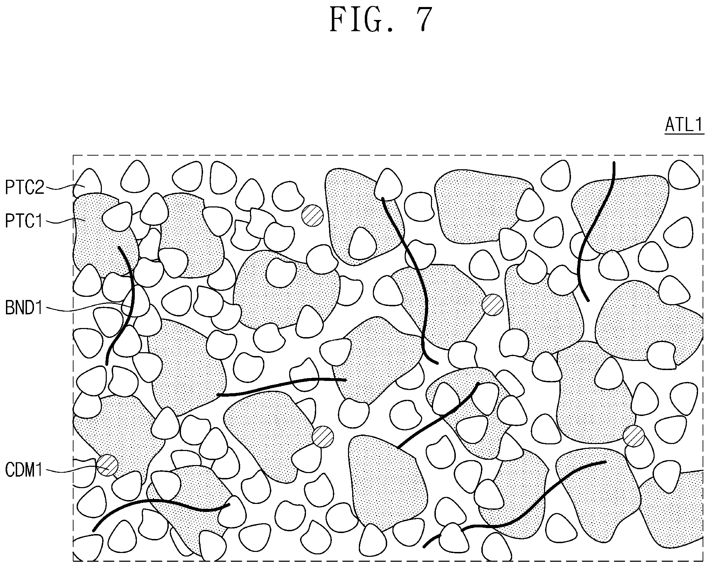

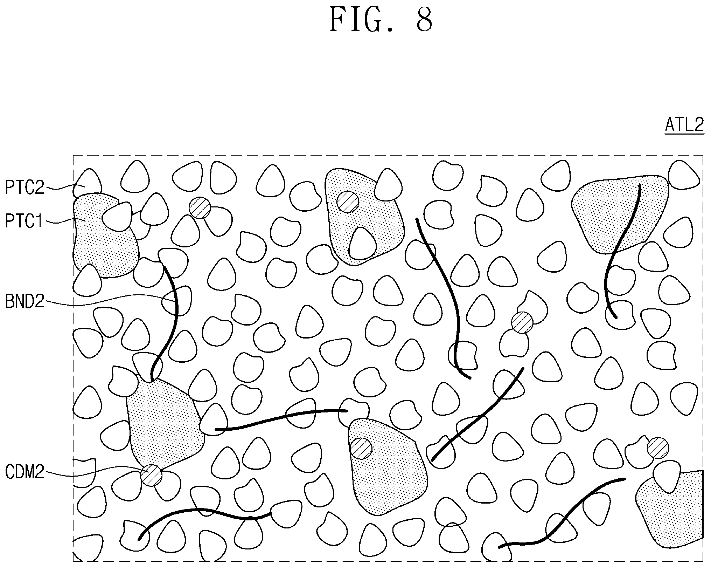

In an example embodiment, referring to FIGS. 7 and 8, a first particle PTC1 may be illustrated in the form of a single particle. In this description, the term "single particle" may refer to an individual particle without a grain boundary therein. The single particle may indicate one particle, a monolithic structure, a single unitary structure, or a non-aggregated particle, in which particles are not aggregated together with one another but present as an independent phase in terms of morphology. For example, the single particle may be a single crystal. Alternatively, the single particle may be a particle including several crystals. The single particle may be independently divided. Alternatively, the single particle may have a form in which about 2 to about 100 independent particles are attached to each other. When the first particle PTC1 is a single particle, an average particle diameter of the first particle PTC1 may range from ≥ 1 µm to ≤ 10 µm.

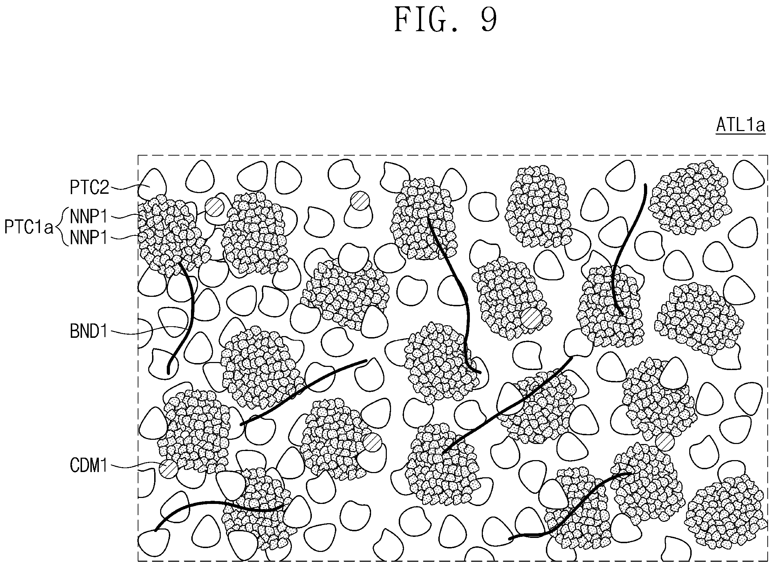

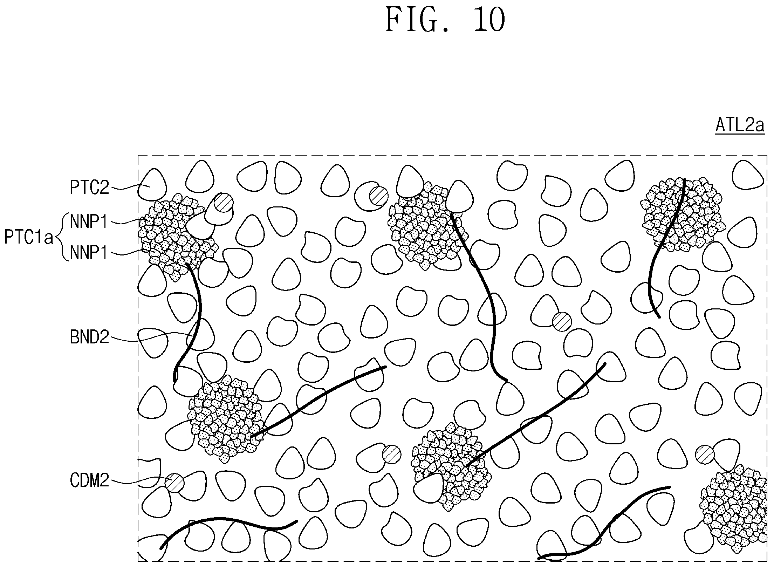

In an example embodiment, referring to FIGS. 9 and 10, a first particle PTC1a may be illustrated in the form of a secondary particle. The secondary particle may have a polycrystalline form, which indicates a form in which at least two or more secondary particles are aggregated. For example, one first particle PTC1a may include a plurality of first primary particles NNP1 that are aggregated with each other. The first particle PTC1a may have a substantially spherical or substantially oval shape.

When the first particle PTC1 is a secondary particle, the first particle PTC1 may have an average particle diameter in a range of ≥ 10 µm to ≤ 15 µm. The average particle diameter of the first particle PTC1 may be the same as or greater than the average particle diameter of the second particle PTC2 which is discussed below. In an example embodiment, the average particle diameter may be measured by a particle size analyzer. The average particle may be obtained by randomly selecting about 30 or more first particles PTC1 from an electron microscope image of the positive electrode active material, and taking a particle diameter (D50) of particles having an accumulative volume of 50 vol% in a particle size distribution.

The average particle diameter (D50) as referred to herein may be measured by laser diffraction analysis using a laser diffraction particle size analyzer (e.g., Malvern Mastersizer) in accordance with ISO 13320.

### Second Particle PTC2

The second particle PTC2 may include an olivine-based positive electrode active material.

In an example embodiment, the olivine-based positive electrode active material may include at least one of lithium iron phosphate oxide (LFP) and lithium manganese iron phosphate oxide (LMFP).

In an example embodiment, the second particle PTC2 may include a compound represented by Chemical Formula 2.

Chemical Formula 2: Liₐ₂Feₓ₂B_{y2}PO_{4-b2}

In Chemical Formula 2, 0.8 ≤ a2 ≤ 1.2, 0.1 ≤ x2 ≤ 1.0, 0.001 ≤ y2 ≤ 0.05, and 0 ≤ b2 ≤ 0.05.

In Chemical Formula 2, x2+y2 ≤ 1. For example, x2+y2=1.

In Chemical Formula 2, B may be or include at least one of Ti, Mg, V, or Nb.

The second particle PTC2 may have an advantage of high economical efficiency, increased structural stability, and desired or improved lifespan characteristics. The structural stability may cause relatively few chemical changes even after repeated charging and discharging.

Referring to FIGS. 7 to 11, the second particle PTC2 may have the shape of a primary particle. The second particle PTC2 may have the shape of a primary particle as a single particle. In this description, the term "single particle" may refer to an individual particle without a grain boundary therein. The single particle may indicate one particle, a monolithic structure, a single unitary structure, or a non-aggregated particle, in which particles are not aggregated together with one another but are present as an independent phase in terms of morphology. For example, the single particle may be a single crystal. Alternatively, the single particle may be a particle including several crystals. The single particle may be independently divided. Alternatively, the single particle may have a form in which about 2 to about 100 independent particles are attached to each other. When the second particle PTC2 is a single particle, an average particle diameter of the second particle PTC2 may range from ≥ 1 µm to ≤ 10 µm. An average particle diameter of the second particle PTC2 may be the same as or less than the average particle diameter of the first particle PTC1 discussed above. In an example embodiment, the average particle diameter may be measured by a particle size analyzer. The average particle may be obtained by randomly selecting about 30 or more second particles PTC2 from an electron microscope image of the positive electrode active material, and taking a particle diameter (D50) of particles having a cumulative volume of 50 vol% in a particle size distribution.

In an example embodiment, the second particle PTC2 may include a coating layer on a surface thereof. The coating layer may cover substantially an entirety, or a portion of the surface of the second particle PTC2. For example, the coating layer may include carbon and/or a carbon-containing compound. The coating layer may allow the second particle PTC2 to have improved structural stability and increased electrical conductivity.

### First Active Material Layer ATL1

FIG. 6 is a cross-sectional view illustrating a positive electrode for a rechargeable lithium battery, according to an example embodiment of the present disclosure. FIG. 7 is an enlarged view illustrating a first active material layer of a positive electrode for a rechargeable lithium battery according to an example embodiment of the present disclosure.

As illustrated in FIG. 6, a first active material layer ATL1 may be disposed on a current collector COL1.

Referring to FIGS. 7 and 9, the first active material layer ATL1 may include a first particle PTC1, a second particle PTC2, a first binder BND1, and a first conductive material CDM1.

As the first active material layer ATL1 includes the first particle PTC1 mixed with the second particle PTC2, it may be possible to compensate for disadvantages, such as low capacity and low energy density, of a lithium iron phosphate-based positive electrode active material. For example, it may be possible to achieve the high capacity and high energy density as the advantage of the first particle PTC1, and the high economical efficiency as the advantage of the second particle PTC2.

An amount ratio of the first particle PTC1 in the first active material layer ATL1 may be greater than an amount ratio of the first particle PTC1 in a second active material layer ATL2 which is discussed below. The first particle PTC1 may be present in an amount in a range of ≥ 70% to ≤ 90% in the first active material layer ATL1. When the first particle PTC1 is present in an amount in a range of ≥ 70% to ≤ 90% in the first active material layer ATL1, an adhesion may be improved compared to when the first particle PTC1 is not present or present in an amount in a range of ≥ 70% or lower in the first active material layer ATL1, and an electrode plate resistance may be reduced compared to when the first particle PTC1 is present in an amount in a range of ≥ 90% or higher in the first active material layer ATL1.

The first binder BND1 may be present in an amount in a range of ≥ 1.2 parts by weight to ≤ 2.0 parts by weight relative to 100 parts by weight of the first active material layer ATL1. The first conductive material CDM1 may be present in an amount of ≥ 1.2 parts by weight to ≤ 2.0 parts by weight relative to 100 parts by weight of the first active material layer ATL1. The amount of the first binder BND1 may be less than the amount of a second binder BND2 which is discussed below. When the first active material layer ATL1 satisfies the range of the first binder BND1 and the range of the first conductive material CDM1, it may be possible not only to improve or maximize a battery capacity and energy density, but also to facilitate a process for electrode plates.

The first binder BND1 may be configured to satisfactorily adhere the positive electrode active materials PTC1 and PTC2 to each other, and to attach the positive electrode active materials PTC1 and PTC2 to the current collector COL1. The first binder BND1 may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The first conductive material CDM1 may be included to provide an electrode with conductivity, and any suitable electrically conductive material that does not cause chemical change in a battery may be included as the first conductive material CDM1 to constitute the battery. The first conductive material CDM1 may include, for example, a carbon-based material such as at least one of natural graphite, artificial graphite, carbon black, acetylene black, Ketjenblack, carbon fiber, carbon nano-fiber, and carbon nano-tube; a metal powder or metal fiber including at least one or more of copper, nickel, aluminum, and silver; a conductive polymer such as a polyphenylene derivative; or a mixture thereof.

The first active material layer ATL1 may be in contact with one surface of the current collector (see COL1 of FIG. 6).

The first active material layer ATL1 may have a first thickness T1. In an example embodiment, the first thickness T1 may increase along with an increase in weight of the first particles PTC1 and/or of the second particle PTC2 included in the first active material layer ATL1.

Referring back to FIG. 7, the first active material layer ATL1 may include a first particle PTC1 and a second particle PTC2 in the form of single particles. As discussed above, when the first particle PTC1 is a single particle, an average particle diameter of the first particle PTC1 may range from ≥ 1 µm to ≤ 10 µm.

Referring back to FIG. 9, a first active material layer ATL1a may include a second particle PTC2 in the form of a single particle, and a first particle PTC1a in the form of a secondary particle. The first particle PTC1a may be in the form of a secondary particle in which nano-sized fine primary particles NNP1 are aggregated. For example, one first particle PTC1a may include a plurality of first primary particles NNP1 that are aggregated with each other. One first particle PTC1a may be in the form of a secondary particle in which a plurality of first primary particles NNP1 are aggregated, and the first particle PTC1a may have a substantially spherical or substantially oval shape. The first primary particles NNP1 may have an average size of ≥ 100 nm to ≤ 200 nm. In this case, the first particle PTC1a may have an average particle diameter (D50) of ≥ 10 µm to ≤ 14 µm.

### Second Active Material Layer ATL2

FIGS. 8, 10, and 11 are enlarged views illustrating the second active material layer ATL2 of a positive electrode for a rechargeable lithium battery, according to an example embodiment of the present disclosure.

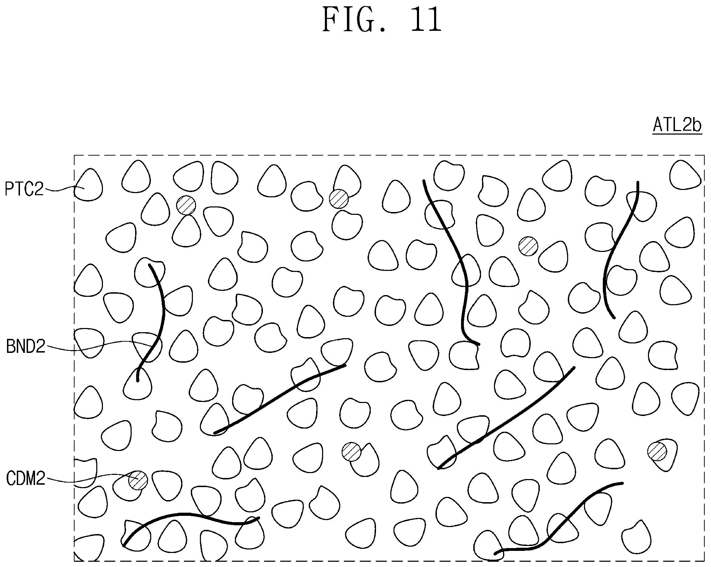

FIG. 8 is an enlarged view illustrating a case where the first particle PTC1 and the second particle PTC2 have single particle shapes. FIG. 10 is an enlarged view of a second active material layer ATL2a in which the first particle PTC1a has a second particle shape. FIG. 11 is an enlarged view of a second active material layer ATL2b in which the first particle PTC1 is not present.

As shown in FIG. 6, the second active material layer ATL2 may be disposed on the first active material layer ATL1.

Referring to FIGS. 8 and 10, the second active material layer ATL2 may include a first particle PTC1, a second particle PTC2, a second binder BND2, and a second conductive material CDM2. In an example embodiment, referring to FIG. 11, the second active material layer ATL2 may include the second particle PTC2, the second binder BND2, and the second conductive material CDM2.

Referring to FIGS. 8 and 10, the first particle PTC1 or PTC1a may be present in an amount that is greater than about 0% and equal to or less than about 30% in the second active material layer ATL2 or ATL2a. Referring to FIG. 11, no first particle is present.

An amount of the first particle PTC1 included in the first active material layer ATL1 may be greater than an amount of the first particle PTC1 included in the second active material layer ATL2. In an example embodiment, an amount of the first particle PTC1 included in the first active material layer ATL1 may be equal to or greater than twice the amount of the first particle PTC1 included in the second active material layer ATL2.

A weight of the first particle PTC1 may be in a range of ≥ 25% to ≤ 35% of the total weight of the first active material layer ATL1 and the second active material layer ATL2. The first active material layer ATL1 and the second active material layer ATL2 may have a thickness ratio in a range of ≥ 2:8 to ≤ 3:7. The first active material layer ATL1 and the second active material layer ATL2 may have a porosity in a range of ≥ 20% to ≤ 25%.

A pore of the first active material layer ATL1 may have a diameter in a range of ≥ 0.06 µm to ≤ 0.065 µm, and a pore of the second active material layer ATL2 may have a diameter in a range of ≥ 0.03 µm to ≤ 0.04 µm. The porosity of the first active material layer ATL1 may be in a range of ≥ 100% to ≤ 125% of the porosity of the second active material layer ATL2.

The porosity may be determined through analysis of a scanning electron microscope (SEM) image. Specifically, a cross-section of an electrode may be extracted as a sample and fixed onto an SEM stage, after which a cross-sectional image may be obtained through SEM imaging. An image analysis tool (e.g., MATLAB, ImageJ, etc.) may be used to load the obtained image, and a binary thresholding process may be performed to separate pores from non-pore regions based on contrast. The separated image may be converted into a black (pore region) and white (negative electrode active material region) binary image by applying an appropriate threshold. Subsequently, the porosity may be calculated using Equation 1 below. The above-described image analysis for porosity determination may be performed, for example, on an area of 5 µm × 5 µm.

The second binder BND2 may be configured to satisfactorily adhere the first particle PTC1 and the second particle PTC2 to each other. The second binder BND2 may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto. The second binder BND2 may or may not be the same as the first binder BND1.

The second conductive material CDM2 may be included to provide an electrode with conductivity, and any suitable electrically conductive material that does not cause a chemical change in a battery may be included as the second conductive material CDM2 to constitute the battery. The second conductive material CDM2 may include, for example, a carbon-based material such as or including at least one of natural graphite, artificial graphite, carbon black, acetylene black, Ketjenblack, carbon fiber, carbon nano-fiber, and carbon nano-tube; a metal powder or metal fiber including one or more of copper, nickel, aluminum, and silver; a conductive polymer such as a polyphenylene derivative; or a mixture thereof. The second conductive material CDM2 may or may not be the same as the first conductive material CDM1.

The second active material layer ATL2 may be coated to contact one surface of the first active material layer ATL1. The one surface of the first active material layer ATL1 may be a surface where the first active material layer ATL1 is not in contact with the current collector (see COL1 of FIG. 6). For example, the current collector COL1, the first active material layer ATL1, and the second active material layer ATL2 may be disposed, e.g., sequentially disposed.

The second active material layer ATL2 may have a second thickness T2. In an example embodiment, the second thickness T2 may increase along with an increase in weight of the first particles PTC1 and/or the second particle PTC2 included in the second active material layer ATL2.

### Positive Electrode including First and Second Active Material Layers

FIG. 6 is a cross-sectional view illustrating a positive electrode for a rechargeable lithium battery according to an example embodiment of the present disclosure. Referring to FIG. 6, as discussed above, the positive electrode 10 may include a current collector COL1 and a positive electrode active material layer AML. The positive electrode active material layer AML may be provided on the current collector COL1.

The positive electrode active material layer AML may include positive electrode active materials PTC1 and PTC2. An amount of the positive electrode active materials PTC1 and PTC2 in the positive electrode active material layer AML may range from ≥ 90 wt% to ≤ 99 wt% relative to 100 wt% of the positive electrode active material layer AML.

The positive electrode active material layer AML may include binders BND1 and BND2, and conductive materials CDM1 and CDM2. Amounts of the binders BND1 and BND2 and the conductive materials CDM1 and CDM2 may be in a range of ≥ 0.5 wt% to ≤ 5 wt% relative to 100 wt% of the positive electrode active material layer AML.

The positive electrode active material layer AML may include a first active material layer ATL1 and a second active material layer ATL2. As the positive electrode active material layer AML is configured such that the second active material layer ATL2 in which a nickel-based active material is relatively less included is provided on the first active material layer ATL1 in which a nickel-based active material is more, or abundantly, included, an adhesive force to the current collector COL1 may increase to easily fabricate an electrode plate and to decrease resistance of an electrode plate. Additionally, it may be possible to provide a rechargeable lithium battery which performance is desired or improved.

The first active material layer ATL1 may have a first thickness T1. In an example embodiment, the first thickness T1 may increase along with an increase in weight of the first particles PTC1 and/or the second particle PTC2 included in the first active material layer ATL1. The second active material layer ATL2 may have a second thickness T2. In an example embodiment, the second thickness T2 may increase along with an increase in weight of the first particles PTC1 and/or the second particle PTC2 included in the second active material layer ATL2.

The first active material layer ATL1 and the second active material layer ATL2 may have a thickness ratio (T1:T2) ranging from ≥ 2:8 to ≤ 3:7. For example, the first active material layer ATL1 and the second active material layer ATL2 may have a thickness ratio (T1:T2) of about 5:5. When the thickness ratio (T1:T2) of the first active material layer ATL1 to the second active material layer ATL2 falls within the range above, the positive electrode active material layer AML may have an improved adhesive force to the current collector COL1, and thus it may be possible not only to improve or maximize a battery capacity and energy density, but also to facilitate a process for electrode plates.

As illustrated in FIGS. 6 and 7, the first active material layer ATL1 may be between the current collector COL1 and the second active material layer ATL2, and the second particles PTC2 may be mixed in an appropriate ratio with the first particles PTC1, which may result in an improvement in adhesive force of an electrode plate and a reduction in amount of the binder BND. In addition, there may be improvement in capacity, density characteristics, high-temperature stability, and lifespan properties. Additionally, the first particle PTC1 may have a bimodal shape in which a single particle shape and a secondary particle shape are mixed, thereby having an improved density.

### Manufacture of Positive Electrode

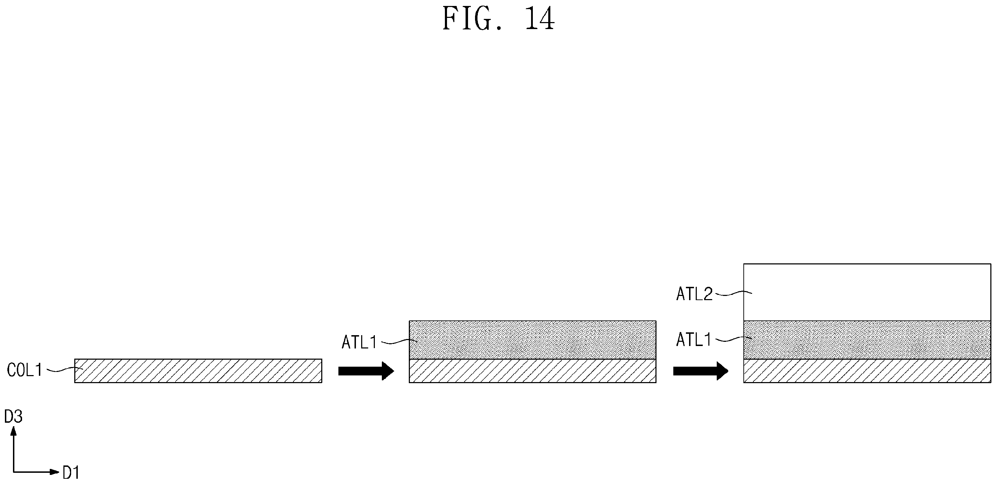

FIG. 14 is a diagram illustrating a method of manufacturing a positive electrode, according to an example embodiment of the present disclosure.

Referring to FIG. 14, a method of manufacturing a positive electrode according to an example embodiment of the present disclosure may include providing a current collector COL1, forming a first active material layer ATL1 on the current collector COL1, and forming a second active material layer ATL2 on the first active material layer ATL1. The first active material layer ATL1 may include a layered positive electrode active material as discussed in FIG. 7. In addition, the second active material layer ATL2 may include an olivine-based positive electrode active material discussed above in FIG. 7.

### Manufacture of First Active Material Layer

The following describes in detail a method of manufacturing a first active material layer according to an example embodiment of the present disclosure. A high-nickel-based precursor may be prepared. The high-nickel-based precursor may include Ni of Chemical Formula 1 discussed above. An amount of Ni relative to the total amount of metal in the high-nickel-based precursor may be greater than about 80 at%. In an example embodiment, the high-nickel-based precursor may further include Co and Mn.

In an example embodiment, the high-nickel-based precursor may be obtained by a coprecipitation method. For example, the coprecipitation method may include dissolving a raw material of transition metal in a solvent such as distilled water, and causing precipitation by continuously providing a reactor with a transition metal salt solution along with a chelating agent and an alkaline aqueous solution. A precipitate may be collected in the form of slurry, and a slurry solution may then be filtered and dried to obtain a metal composite oxide or the high-nickel-based precursor.

In the present disclosure, the raw material of transition metal may include a metal salt of Ni. The raw material of transition metal may further include a metal salt of at least one of Co and Mn. The metal salt may include at least one of sulfate, nitrate, acetate, halide, or hydroxide, and there is no particular limitation as long as a material can be dissolved in a solvent. According to an example embodiment, the raw material of transition metal may include at least one of a nickel salt, a cobalt salt, and a manganese salt. The raw material of transition metal may be mixed by adjusting a molar ratio to allow the high-nickel-based precursor to have a nickel amount that is equal to or greater than about 80 at%.

The high-nickel-based precursor and a lithium source may be mixed in a given ratio to form a mixture. For example, the high-nickel-based precursor and the lithium source may be mixed in a molar ratio of about 1: 1. The lithium source may include at least one of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

A solvent may be removed from the mixture to form a dried mixture. The dried mixture may be calcined. A temperature of the calcination process may range from ≥ 700°C to ≤ 1,000°C or from ≥ 900°C to ≤ 1,000°C. The calcination process may be performed under an oxidizing atmosphere such as, e.g., air or oxygen. A heat treatment time of the calcination process may be in a range of ≥ 10 hours to ≤ 30 hours. In an example embodiment of the present disclosure, before the calcination process, a preliminary calcination process may be additionally performed at a temperature in a range of ≥ 150°C to ≤ 800°C.

In an example embodiment of the present disclosure, the calcination process may be performed after a melting agent is additionally introduced to the mixture. The melting agent may be or include a compound including at least one metal such as at least one of Zr, La, S, and Nb. The use of the melting agent may cause the fact that a layered positive electrode active material included in the first active material layer may be favorably formed in the form of a single particle. In addition, the layered positive electrode active material may have an increased average particle diameter.

The calcination process may form the layered positive electrode active material from the mixture including the high-nickel-based precursor and the lithium source. A crushing process may be performed on the synthesized layered positive electrode active material.

A coating process may be performed on the crushed layered positive electrode active material. For example, the layered positive electrode active material and a coating raw material may be added and mixed in a solvent. The coating raw material may include, for example, boron and/or aluminum. The layered positive electrode active material may be filtered and dried, and then a surface treatment may be performed on the layered positive electrode active material. The surface treatment may include performing a heat treatment process under an oxidizing atmosphere such as, e.g., air or oxygen. The surface treatment may be performed at a temperature in a range of ≥ 500°C to ≤ 800°C.

In an example embodiment of the present disclosure, the coating process may include a dry coating process. For example, the layered positive electrode active material and the coating raw material may be introduced without any solvent into a dry coating apparatus, and may be stirred to mix with each other. The surface treatment may be performed on an obtained dry mixture.

### Manufacture of Second Active Material Layer

The following describes in detail a method of manufacturing a second active material layer according to an example embodiment of the present disclosure. An iron phosphate precursor, a lithium source, a carbon source, and a dopant source may be added to and mixed in a solvent. For example, the solvent may be or include water or ethanol. The iron phosphate precursor may be or include a compound including all of iron (F) and phosphorus (P), or a mixture of a compound including iron (F) and a compound including phosphorus (P). For example, the iron phosphate precursor may include FePO₄·H₂O or a mixture of FeSO₄ and H₃PO₄.

The lithium source may include at least one of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one of glucose, sucrose, fructose, cellulose, starch, citric acid, polyacrylic acid, polyethylene glycol, and dopamine.

The dopant source may include oxide that contains dopant metal and/or the dopant source may include chloride that contains dopant metal. For example, the dopant source may include at least one of titanium oxide, magnesium oxide, vanadium oxide, and niobium oxide.

A wet crushing may be performed on the mixture. The wet crushing may use an ordinary wet mill capable of controlling temperatures. For example, the wet crushing may use at least one of a beads mill, a ball mill, an attrition mill, an apex mill, a super mill, and a basket mill. During the wet crushing process, particles in the mixture may be crushed to fine sizes.

A solvent may be removed from the mixture to form a dried mixture. In an example embodiment of the present disclosure, the formation of the dried mixture may include performing direct evaporation on the mixture. For example, the direct evaporation may include a static drying or a spray drying.

The dried mixture may be calcined under an inert atmosphere. The inert atmosphere may be or include a nitrogen atmosphere and/or an argon atmosphere. A temperature of the calcination process may range from ≥ 500°C to ≤ 1,000°C or from ≥ 600°C to ≤ 800°C. The calcination process may be performed for a duration in a range of ≥ 4 hours to ≤ 20 hours or in a range of ≥ 6 hours to ≤ 12 hours. The calcination of the dried mixture may form an olivine-based positive electrode active material including the compound represented by Chemical Formula 2 discussed above. A dry crushing process may be performed on the calcined olivine-based positive electrode active material.

At least one of the formations of the first active material layer ATL1 and the formation of the second active material layer ATL2 may include performing a wet process or a dry process. In an example embodiment, the first active material layer ATL1 may be formed by a wet process, and the second active material layer ATL2 may be formed by a dry process. Alternatively, the first active material layer ATL1 may be formed by a dry process, and the second active material layer ATL2 may be formed by a wet process. The present disclosure, however, is not limited thereto.

The wet process may be performed in such a way that a positive electrode active material, a conductive material, and a binder are mixed in a solvent to prepare a positive electrode mixture, the mixture is coated on a current collector, and then the current collector is dried and pressed. The solvent in slurry may be a widely included solvent in the art, and for example, may include at least one of dimethyl sulfoxide (DMSO), isopropyl alcohol, N-methyl pyrrolidone (NMP), acetone, water, and a combination thereof.

The dry process may be performed in such a way that a positive electrode active material, a dry conductive material, and a dry binder are dry-mixed without a solvent to prepare a positive electrode mixture, and the mixture is disposed and pressed on a current collector.

Afterwards, the positive electrode may undergo, e.g., sequentially undergo, a roll pressing process, a slitting process, and a notching process. A positive electrode, a separator, and a negative electrode may be stacked, and an electrolyte may be provided to fabricate a rechargeable lithium battery according to an example of the present disclosure.

The following describes some examples and comparative examples of the present disclosure. The following embodiments, however, are merely examples, and the present disclosure is not limited to the example embodiments discussed below.

### Preparation 1

### First Particle:

A coprecipitation method was used to prepare a high-nickel-based precursor. For example, nickel sulfate (NiO₄6H₂O), cobalt sulfate (CoSO₄7H₂O), and manganese sulfate (MnSO₄H₂O) in a molar ratio of 92:5:2 as a raw material of nickel-based metal hydroxide were dissolved in distilled water as a solvent, thereby preparing a metal raw material mixture solution. The metal raw material mixture solution, ammonium hydroxide, and sodium hydroxide were added to and reacted in a reactor. A slurry solution in the reactor was filtered and washed with high-purity distilled water. The washed material was dried in a hot-air oven at 210°C for 24 hours to obtain powder of small-particle precursor (Ni_{0.92}0Co_{0.05}Mn_{0.02}(OH)₂) with a particle size of about 4 µm.

A Henschel mixer was used such that the high-nickel-based precursor and anhydrous lithium hydroxide (LiOH) were mixed in a dry type. Lithium and transition metal were mixed in a molar ratio of about 1: 1. The transition metal was a total sum (Ni+Co+Mn) of transition metals contained in the high-nickel-based precursor. A melting agent was additionally added to the mixture and thermally treated (or calcined) for 15 hours at about 750°C to synthesize a high-nickel-based positive electrode active material. The high-nickel-based positive electrode active material was crushed with a Jet Mill under a pressure of 3 bars.

The high-nickel-based positive electrode active material, or a first positive electrode active material, was added to and washed with distilled water. A boron and aluminum coating was performed by introducing boron oxide and aluminum oxide present in an amount of 3 mol% relative to the sum total of transition metal of the high-nickel-based positive electrode active material. The first positive electrode active material was dried for 12 hours at 150°C, and a heat treatment (or, surface treatment) was performed for 15 hours at about 700°C under an oxygen atmosphere, thereby preparing a first particle.

### Preparation 2

### Second Particle:

Water was mixed with Fe₁PO₄·H₂O as an iron phosphate precursor and lithium carbonate in molar ratio of 1:1.03, 2500 ppm of titanium dioxide, and 8 wt% of glucose. A ball mill was utilized to perform a wet crushing process on the mixture. The mixture was evaporated and dried on a heating furnace tray, and then introduced into a vacuum oven at 85°C and dried for 4 hours. The dried mixture was calcined at 650°C for 10 hours under a nitrogen atmosphere. The calcined product was crushed to obtain a second particle in the form of a single particle.

### Embodiment 1: Manufacture of Positive Electrode including First Active Material Layer and Second Active Material Layer

N-methyl pyrrolidone was dispersed therein with the first particle prepared by Preparation 1, the second particle prepared by Preparation 2, a first binder (polyvinylidene fluoride), and a first conductive material (carbon black) mixed in a weight ratio of 0.85 : 0.05 : 0.08 : 0.02 to prepare a first active material slurry.

N-methyl pyrrolidone was dispersed therein with the second particle prepared by Preparation 2, a second binder (polyvinylidene fluoride), and a second conductive material (carbon black) mixed in a weight ratio of 0.9 : 0.08 : 0.02 to prepare a second active material slurry.

The first active material slurry was coated and dried on a positive electrode current collector, or an aluminum (Al) foil of 12 µm in thickness, to form a first active material layer. The second active material slurry was coated and dried on the first active material layer to form a second active material layer. At this time, the first active material layer and the second active material layer were formed to allow the first particle to have a weight ratio of 30 wt% in the first active material slurry and the second active material slurry. A roll pressing was performed to manufacture a positive electrode in which the aluminum current collector, the first active material layer, and the second active material layer were sequentially stacked.

### Embodiment 2: Manufacture of Positive Electrode Including First Active Material Layer and Second Active Material Layer

A positive electrode was manufactured in the same method as in Embodiment 1, with a difference that the first particle and the second particle were present in a weight ratio of 0.80 : 0.20 in the first active material slurry.

### Embodiment 3: Manufacture of Positive Electrode Including First Active Material Layer and Second Active Material Layer

A positive electrode was manufactured in the same method as in Embodiment 1, with a difference that the first particle and the second particle were present in a weight ratio of 0.90 : 0.10 in the first active material slurry.

### Comparative 1: Manufacture of Positive Electrode Including One Active Material Layer Not Containing First Particle

N-methyl pyrrolidone was dispersed therein with the second particle prepared by Preparation 2, a first binder (polyvinylidene fluoride), and a first conductive material (carbon black) mixed in a weight ratio of 0.9 : 0.08 : 0.02 to prepare a first active material slurry. The first active material slurry was coated and dried on a positive electrode current collector, or an aluminum (Al) foil of 12 µm in thickness, to form a first active material layer. A roll pressing was performed to manufacture a positive electrode in which the aluminum current collector and the first active material layer were sequentially stacked.

### Comparative 2: Manufacture of Positive Electrode Including One Active Material Layer including First Particle and Second Particle

N-methyl pyrrolidone was dispersed therein with the first particle prepared by Preparation 1, the second particle prepared by Preparation 2, a first binder (polyvinylidene fluoride), and a first conductive material (carbon black) mixed in a weight ratio of 0.7 : 0.2 : 0.08 : 0.02 to prepare a first active material slurry. The first active material slurry was coated and dried on a positive electrode current collector, or an aluminum (Al) foil of 12 µm in thickness, to form a first active material layer. A roll pressing was performed to manufacture a positive electrode in which the aluminum current collector and the first active material layer were sequentially stacked.

### Comparative 3: Manufacture of Positive Electrode Including First Active Material Layer Containing Less Than 70% of First Particle

N-methyl pyrrolidone was dispersed therein with the first particle prepared by Preparation 1, the second particle prepared by Preparation 2, a first binder (polyvinylidene fluoride), and a first conductive material (carbon black) mixed in a weight ratio of 0.6 : 0.3 : 0.08 : 0.02 to prepare a first active material slurry.

N-methyl pyrrolidone was dispersed therein with the second particle prepared by Preparation 2, a second binder (polyvinylidene fluoride), and a second conductive material (carbon black) mixed in a weight ratio of 0.9 : 0.08 : 0.02 to prepare a second active material slurry.

The first active material slurry was coated and dried on a positive electrode current collector, or an aluminum (Al) foil of 12 µm in thickness, to form a first active material layer. The second active material slurry was coated and dried on the first active material layer to form a second active material layer. A roll pressing was performed to manufacture a positive electrode in which the aluminum current collector, the first active material layer, and the second active material layer were sequentially stacked.

### Comparative 4: Manufacture of Positive Electrode Including First Active Material Layer Containing More Than 90% of First Particle

N-methyl pyrrolidone was dispersed therein with the first particle prepared by Preparation 1, the second particle prepared by Preparation 2, a first binder (polyvinylidene fluoride), and a first conductive material (carbon black) mixed in a weight ratio of 0.85 : 0.05 : 0.08 : 0.02 to prepare a first active material slurry.

N-methyl pyrrolidone was dispersed therein with the second particle prepared by Preparation 2, a second binder (polyvinylidene fluoride), and a second conductive material (carbon black) mixed in a weight ratio of 0.9 : 0.08 : 0.02 to prepare a second active material slurry.

The first active material slurry was coated and dried on a positive electrode current collector, or an aluminum (Al) foil of 12 µm in thickness, to form a first active material layer. The second active material slurry was coated and dried on the first active material layer to form a second active material layer. A roll pressing was performed to manufacture a positive electrode in which the aluminum current collector, the first active material layer, and the second active material layer were sequentially stacked.

### Fabrication of Rechargeable Lithium Battery

A 2032-type coin half-cell was fabricated using the manufactured positive electrode and a lithium metal counter electrode. A separator (of about 16 µm in thickness) formed of a porous polyethylene (PE) film was interposed between the positive electrode and the lithium metal counter electrode, and an electrolyte was introduced to fabricate a rechargeable lithium battery. 1.3 M of LiPF6 was mixed with a solvent including ethylene carbonate (EC), ethyl methyl carbonate (ECM), and dimethyl carbonate (DMC) mixed in a volume ratio of 3:4:3, and the mixture was used as the electrolyte.

### Evaluation 1: Adhesion

The positive electrode plates manufactured in Embodiments 1 to 3 and Comparatives 1 to 4 were evaluated to measure their peel strength in accordance with ASTM D3330. A universal testing machine (UTM, Instron 3345) was used as a measurement instrument.

The positive electrode plate, in which active material layers were disposed on an opposite sides of the current collector prepared in each of Embodiments 1 to 3 and Comparatives 1 to 4, was cut into a size of 25 mm x 150 mm to prepare twenty samples. At room temperature, after an adhesive was coated on a glass substrate and the positive electrode plate was adhered to and roll-pressed against the adhesive, one end of the positive electrode plate was folded at 180°, and then a force applied to the sample was measured while pulling the sample at a speed of 100 mm/min in a direction opposite to the one end. Evaluation results are listed in Table 1 below. A break occurrence rate is expressed as a percentage of the number of samples in which cracks are produced in the positive electrode active material layer on one side of the positive electrode plate which is not in contact with the adhesive during the procedure of folding the positive electrode plate at 180°, among all samples. The peel strength is an average value of 20 samples. The higher the peel strength, the stronger the adhesive force.

The adhesive force on one side of the positive electrode current collector was measured as A-side adhesive force, and the adhesive force on another side of the positive electrode current collector was measured as B-side adhesive force.

**Table 1:**

| | A-side adhesive force (gf/mm) | B-side adhesive force (gf/mm) |
|---|---|---|
| Embodiment 1 | 3.35 | 3.31 |
| Embodiment 2 | 3.37 | 3.30 |
| Embodiment 3 | 3.37 | 3.33 |
| Comparative 1 | 1.48 | 1.36 |
| Comparative 2 | 3.11 | 3.03 |
| Comparative 3 | 2.74 | 2.56 |
| Comparative 4 | 3.38 | 3.32 |

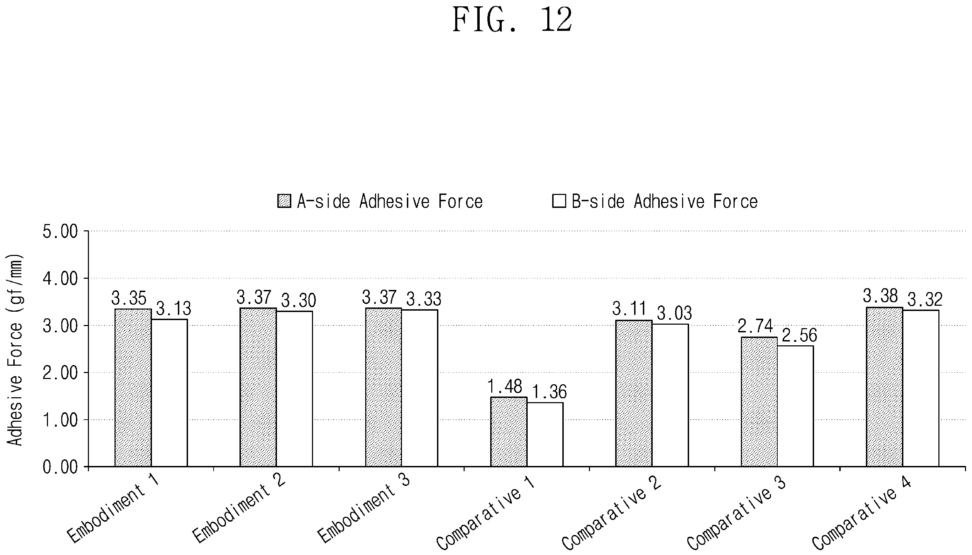

As shown in Table 1, compared to the positive electrodes of Comparatives 1 to 4, the positive electrodes of Embodiments 1 to 3 exhibit an increased peel strength. FIG. 12 depicts a graph of Table 1.

Thus, compared to the positive electrodes of Comparatives 1 to 3, the positive electrodes of Embodiments 1 to 3 have an increased adhesive force between the positive electrode active material layer and the current collector and/or an improved cohesive force of the positive electrode active material layer.

### Evaluation 2: Interfacial Resistance

The positive electrode active materials of Embodiments 1 to 3 and Comparatives 1 to 4 were evaluated to measure the interfacial resistances thereof, and the results are listed in Table 2 below.

An electrode resistance measurement system (RM2610 commercially available from Hioki Corporation) was utilized to measure interfacial resistances at 25°C of the lithium batteries according to Embodiments 1 to 3 and Comparatives 1 to 4.

In the electrode resistance measurement system (Hioki, RM2610), after a probe was placed on the positive electrode to allow the positive electrode active material layer of the positive electrode so as to face the probe, a constant current was allowed to pass through a surface of the positive electrode active material layer, and then surface potential distribution was used to measure a volume resistivity of the positive electrode active material layer and an interfacial resistance between the positive electrode active material layer and the positive electrode current collector.

**Table 2:**

| | Interfacial resistance (Ωcm²) |
|---|---|
| Embodiment 1 | 0.011 |
| Embodiment 2 | 0.010 |
| Embodiment 3 | 0.008 |
| Comparative 1 | 0.049 |
| Comparative 2 | 0.022 |
| Comparative 3 | 0.019 |
| Comparative 4 | 0.007 |

As shown in Table 2, the interfacial resistances of the Embodiments 1 to 3 are less than the interfacial resistances of Comparatives 1 to 3. It was estimated that a small interfacial resistance was given to Embodiments 1 to 3 in which 70% or more Ni was blended into a lower plate.

### Evaluation 3: Mixture Resistance

An electrode resistance measurement system (RM2610 commercially available from Hioki Corporation) was utilized to measure a mixture resistance at 25°C of each of the positive electrodes according to Embodiments 1 to 3 and Comparatives 1 to 4.

In the electrode resistance measurement system (Hioki, RM2610), after a probe was placed on the positive electrode to allow the positive electrode active material layer of the positive electrode so as to face the probe, a constant current was allowed to pass through a surface of the positive electrode active material layer, and then surface potential distribution was used to measure a volume resistivity of the positive electrode active material layer and an interfacial resistance between the positive electrode active material layer and the positive electrode current collector. The volume resistivity of the positive electrode active material layer was considered a mixture resistivity of the positive electrode active material layer.

**Table 3:**

| | Mixture resistivity (Qcm) |
|---|---|
| Embodiment 1 | 2.27 |
| Embodiment 2 | 2.46 |
| Embodiment 3 | 2.79 |
| Comparative 1 | 2.77 |
| Comparative 2 | 3.49 |
| Comparative 3 | 3.36 |
| Comparative 4 | 3.43 |

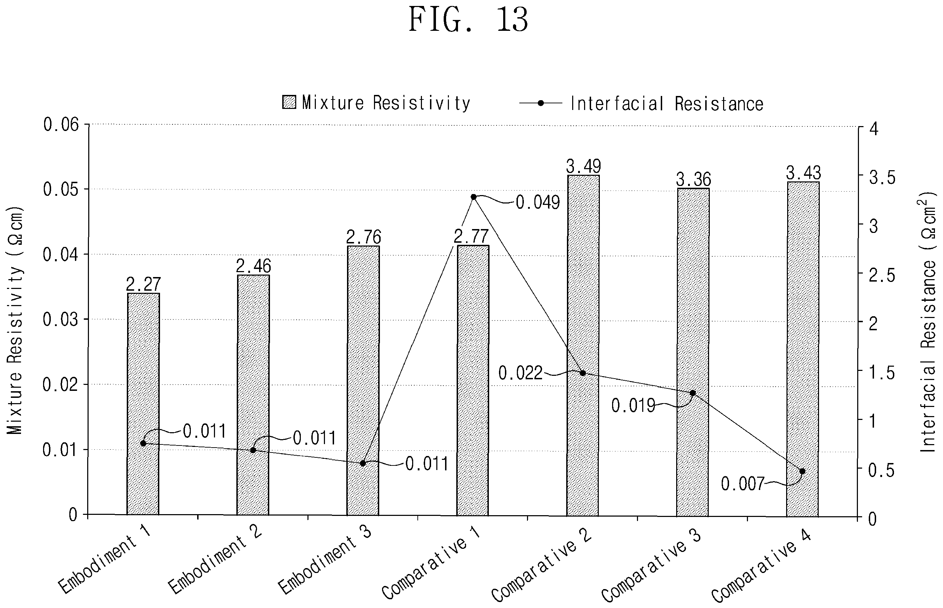

As shown in Table 3 above, the mixture resistivity of Embodiments 1 to 3 is less than the mixture resistivity of Comparatives 1 to 4. FIG. 13 plots a graph of the interfacial resistance and the mixture resistivity.

A positive electrode according to the present disclosure may include an active material layer having a double-layered structure with different ratios of Ni-based active material, thereby having an effect of improving battery characteristics.

A positive electrode according to the present disclosure may include an active material layer with a sufficient ratio of Ni-based active material, thereby having an effect of reducing a battery resistance.

## Claims

1. A positive electrode (10) for a rechargeable lithium battery (100), the positive electrode (10) comprising:
a current collector;
a first active material layer on the current collector; and
a second active material layer on the first active material layer,
wherein the first active material layer comprises:
a first particle comprising a layered positive electrode active material;
a second particle comprising an olivine-based active material;
a first conductive material; and
a first binder,
wherein the second active material layer comprises:
the second particle;
a second conductive material; and
a second binder,
wherein an amount of the first particle in the first active material layer is equal to or greater than 70% and equal to or less than 90%.

2. The positive electrode (10) of claim 1, wherein:
the second active material layer comprises the first particle, and
wherein the amount of the first particle in the second active material layer is greater than 30 % and equal to or less than 90%.

3. The positive electrode (10) of claim 1 or 2, wherein the first particle and the second particle have a single particle shape.

4. The positive electrode (10) of any of the claims 1 to 3, wherein:
the first particle comprises a secondary particle in which a plurality of first primary particles are aggregated, and
an average size of the first primary particles is in a range of ≥ 100 nm to ≤ 200 nm.

5. The positive electrode (10) of claim any of the claims 1 to 4, wherein an average particle diameter (D50) of the first particle is in a range of ≥ 10 µm to ≤ 14 µm.

6. The positive electrode (10) of any of the claims 1 to 5, wherein a weight of the first particle is in a range of ≥ 25% to ≤ 35% of a total weight of the first and second active material layers.

7. The positive electrode (10) of any of the claims 1 to 6, wherein the second particle comprises a compound represented by Chemical Formula 2,
Chemical Formula 2: Liₐ₂Feₓ₂B_{y2}PO_{4-b2}
wherein, in Chemical Formula 2, 0.8 ≤ a2 ≤ 1.2, 0.1 ≤ x2 ≤ 1.0, 0.001 ≤ y2 ≤ 0.05, and 0 ≤ b2 ≤ 0.05,
wherein, in Chemical Formula 2, x2+y2 ≤ 1, and
wherein, in Chemical Formula 2, B comprises at least one of Ti, Mg, V, and Nb.

8. The positive electrode (10) of any of the claims 1 to 7, wherein the first particle comprises a compound represented by Chemical Formula 1,
Chemical Formula 1: Liₐ₁Niₓ₁Co_{y1}Mn_{z1}X_{c1}O_{2-b1}
wherein, in Chemical Formula 1, 0.8 ≤ a1 ≤ 1.2, 0.8 ≤x1 ≤ 1.0, 0 ≤ y1 ≤ 0.2, 0 ≤ z1 ≤ 0.2, 0 ≤ c1 ≤ 0.05, and 0 ≤ b1 ≤ 0.05,
wherein, in Chemical Formula 1, x1+y1+z1+c1 ≤ 1, and
wherein, in Chemical Formula 1, X comprises at least one of Al, Ti, Mg, Zr, Mo, and Nb.

9. The positive electrode (10) of any of the claims 1 to 8, wherein the second active material layer does not include the first particle.

10. The positive electrode (10) of any of the claims 1 to 9, wherein a porosity of the first active material layer is in a range of ≥ 100% to ≤ 125% of a porosity of the second active material layer.

11. The positive electrode (10) of claim any of the claims 1 to 10, wherein the second active material layer comprises the first particle,
wherein an amount of the first particle in the first active material layer is equal to or greater than twice an amount of the first particle in the second active material layer.
